# EUROPEAN PATENT APPLICATION

(11) **EP 4 567 590 A1**
(43) Date of publication of application: **11.06.2025**
(21) Application number: 23872978.4
(22) Date of filing: 22.09.2023
(51) Int. Cl.: G06F 8/65, G06F 8/71, G06F 9/4401, G06F 3/06

(54) **UPDATE METHOD AND ELECTRONIC DEVICE THEREFOR**

(30) Priority: 30.09.2022 KR 20220125181; 31.10.2022 KR 20220142123
(71) Applicant: Samsung Electronics Co., Ltd., Suwon-si, Gyeonggi-do 16677 (KR)
(72) Inventor: LEE, Junsoo, Suwon-si Gyeonggi-do 16677 (KR); HAN, Chankyu, Suwon-si Gyeonggi-do 16677 (KR); OH, Myeongjin, Suwon-si Gyeonggi-do 16677 (KR); LEE, Seyeong, Suwon-si Gyeonggi-do 16677 (KR)
(74) Representative: Gulde & Partner
(86) International application number: PCT/KR2023/014533
(87) International publication number: WO 2024/071861

(57) **Abstract**

An electronic device comprising a memory and a processor is disclosed. The electronic device can arrange update data and a first version operating system (OS) with virtual partitions and attempt booting using a second version OS of a virtual partition. During booting, the electronic device can transmit, to a secure region, result information indicating whether the booting based on the second version OS is successful, and determine, on the basis of the result information, whether to update version information of the secure region.

## Description

### TECHNICAL FIELD

Embodiments disclosed herein relate to an update method and an electronic device therefor.

### BACKGROUND ART

Electronic devices may operate based on various operating systems (OS). The operating system may include various functions for hardware control and software control of an electronic device. For example, the operating system may control various hardware components of the electronic device through a kernel. The operating system may include a framework for supporting the operation of various applications. A user of the electronic device may control the electronic device depending on the support of the operating system.

The operating system may be updated. An update may mean changing the operating system to a newer version by updating at least part of an older version of the operating system. For example, the operating system may be updated for various reasons, such as fixing malfunctions, complementing security vulnerabilities, improving convenience, improving compatibility, or the like. An electronic device may include a function of preventing roll-back of the operating system. The roll-back of the operating system may mean reverting from a newer version of the operating system to an older version of the operating system. For example, a newer version of the operating system may correct the malfunctions and/or may complement security vulnerabilities in an older version of the operating system. If a user rolls back the operating system to the older version, normal operation of the electronic device may not be guaranteed due to malfunctions and/or security vulnerabilities.

The aforementioned information may be provided as the related art to aid in understanding the disclosure. No claim or determination is made as to whether any of the above matters constitutes the related art regarding to the disclosure.

### DISCLOSURE OF THE INVENTION

### TECHNICAL PROBLEM

According to an aspect disclosed herein, there is provided an electronic device including a memory and a processor. The memory may include a first area in which a first version of an operating system (OS) is installed, a second area different from the first area, and a secure area in which version information about the OS is stored. The processor may store update data corresponding to a second version of the OS in the second area. The processor may set a portion of the second area in which the update data is stored and a portion of the first area as a virtual partition. The processor may attempt to boot using the second version of the OS installed in the virtual partition. The processor may transmit a result of the booting to the secure area. The processor may determine whether to change the version information stored in the secure area based on the result.

In addition, according to another aspect disclosed herein, there is provided a method for updating an electronic device including a memory and a processor, including setting a portion of a data area of a first version of an OS installed in a first area of the memory and a data area of update data of a second version stored in a second area of the memory as a virtual partition. The method may include attempting to boot using the second version of the OS installed in the virtual partition. The method may include transmitting a result of the booting to a secure area of the memory. The method may include determining whether to change version information about the OS stored in the secure area based on the result.

In addition, according to still another aspect disclosed herein, there is provided a computer-readable storage medium storing instructions that, when executed, cause a processor to perform operations. The operations may include setting a portion of a data area of a first version of an OS installed in a first area of the memory and a data area of update data of a second version stored in a second area of the memory as a virtual partition. The operations may include attempting to boot using the second version of the OS installed in the virtual partition. The operations may include transmitting a result of the booting to a secure area of the memory. The operations may include determining whether to change version information about the OS stored in the secure area based on the result.

### BRIEF DESCRIPTION OF THE DRAWINGS

FIG. 1 is a block diagram of an electronic device according to an embodiment.
FIG. 2 illustrates a memory structure of the electronic device according to an embodiment.
FIG. 3 illustrates a configuration of a virtual partition according to an embodiment.
FIG. 4 illustrates an updated operating system according to an embodiment.
FIG. 5 illustrates modules of the electronic device according to an embodiment.
FIG. 6 is a signal flow diagram of a method for updating an electronic device according to an embodiment.
FIG. 7 is a signal flow diagram of a method for updating an electronic device according to an embodiment.
FIG. 8 is a flowchart of a method for updating an electronic device according to an embodiment.
FIG. 9 is a block diagram illustrating an electronic device 901 in a network environment 900 according to various embodiments.
FIG. 10 is a block diagram illustrating the program 940 according to various embodiments.

With regard to descriptions of the drawings, similar or the same reference numerals may be used for similar or the same components.

### MODE FOR CARRYING OUT THE INVENTION

Hereinafter, various embodiments of the invention are described with regard to the accompanied drawings. However, the descriptions are not intended to limit the invention to a specific aspect of an embodiment, and the various embodiments of the invention should be understood as including various modifications, equivalents, and/or alternatives of the embodiments of the invention.

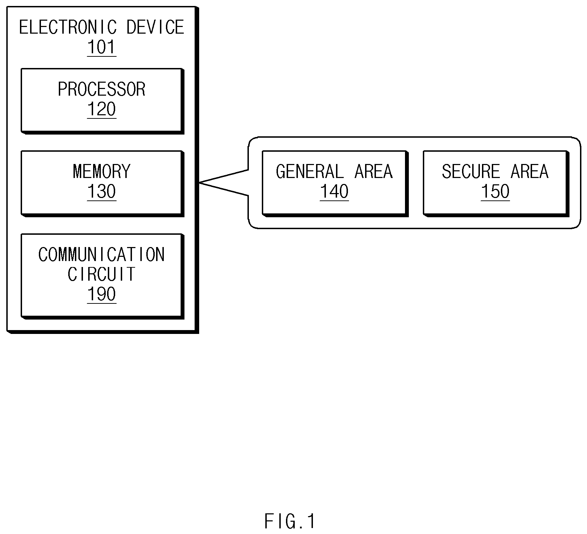

FIG. 1 is a block diagram of an electronic device according to an embodiment.

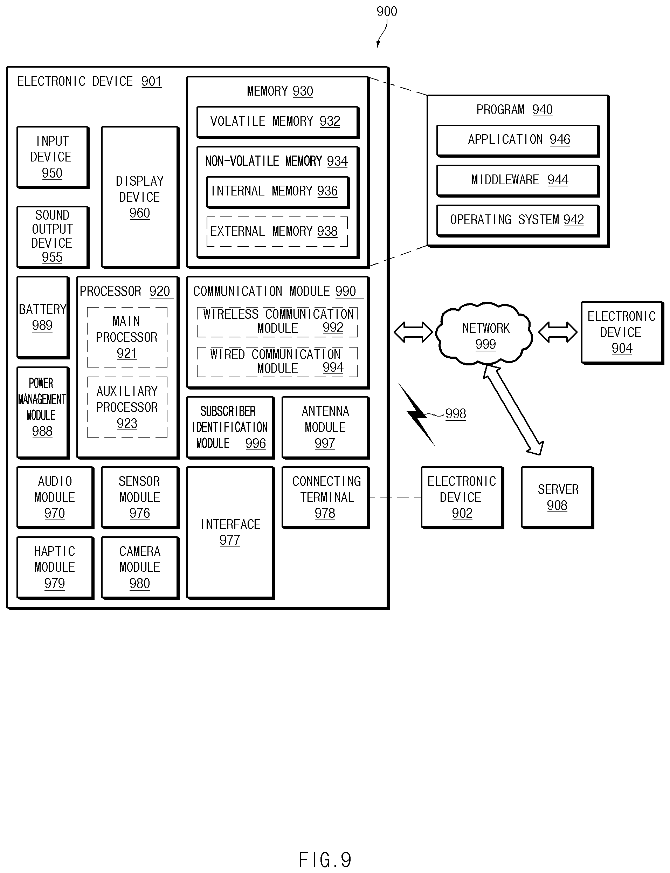

According to one embodiment, an electronic device 101 may include a processor 120, a memory 130, and/or communication circuitry 190. For example, the electronic device 101 may correspond to an electronic device 901 in FIG. 9. For example, the processor 120 may correspond to a processor 920 in FIG. 9. For example, the memory 130 may correspond to a memory 930 in FIG. 9. For example, the communication circuit 190 may correspond to a communication module 990 in FIG. 9. The configuration of the electronic device 101 illustrated in FIG. 1 is exemplary, and embodiments of the disclosure are not limited thereto. For example, the electronic device 101 may further include a configuration not shown in FIG. 1 (e.g., the configuration of the electronic device 901 in FIG. 9).

The processor 120 may be electrically, operatively, or functionally connected to the memory 130 and/or communication circuitry 190. In the disclosure, when one component is referred to as being "operatively" connected to another component, it may mean that the component is connected to operate the other component. For example, one component may operate another component by transmitting a control signal to the other component, either directly or via the still another component. In the disclosure, when one component is referred to as being "functionally" connected to another component, it may mean that the component is connected to execute a function of the other component. For example, one component may execute a function of another component by transmitting a control signal to the other component, either directly or via the yet another component.

The memory 130 may store instructions. When the instructions are executed by the processor 120, the instructions may cause the electronic device 101 to perform various operations. In the disclosure, the operation of the electronic device 101 may be referred to as an operation performed by the processor 120 by executing instructions stored in the memory 130. In the disclosure, the operation of the electronic device 101 or the processor 120 may be referred to as an operation performed by executing instructions stored in a computer-readable storage medium. For example, the computer-readable storage medium may include a non-transitory storage medium.

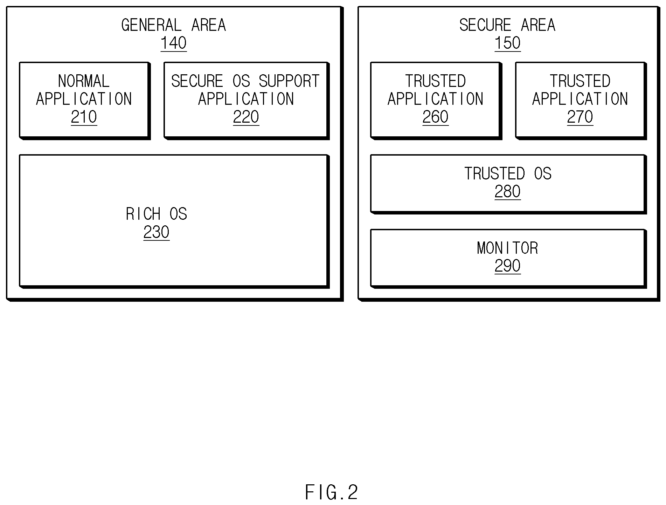

In one embodiment, the memory 130 may include a general area 140 and a secure area 150. The general area 140 is a typical memory area and may be a memory area operated by a general OS. The secure area 150 is a trusted memory area and may be a memory area operated by a secure OS. For example, the general area 140 may be referred to as a memory area within a rich execution environment (REE). For example, the secure area 150 may be referred to as a memory area within a trusted execution environment (TEE). A description of the general area 140 and the secure area 150 may be provided below with reference to FIG. 2.

The communication circuitry 190 may provide communication between the electronic device 101 and other electronic devices (e.g., an electronic device 902, an electronic device 904, and/or a server 908 in FIG. 9). The communication circuitry 190 may support wired communication and/or wireless communication. The communication circuitry 690 may support short-range wireless communication and/or long-range wireless communication. In one example, the electronic device 101 may receive update data from another electronic device using the communication circuitry 190.

According to an embodiment, the electronic device 101 may update an operating system (OS) stored in the memory 130. For example, the electronic device 101 may update the OS based on user input or update the OS at a specified time. For example, the electronic device 101 may update an older version of the OS to a newer version of the OS by recording update data in a portion of the older version of the OS.

The electronic device 101 may support a roll back prevention (RP) function. In one example, RP version information may be stored in the secure area 150. When the update is attempted, when an RP version of an image to be updated (e.g., the binary of the OS to be updated) is lower than a stored RP version, the electronic device 101 may not perform the update. By preventing the update based on the lower RP version, the electronic device 101 may support the RP function. The RP version information may include, for example, version information about the OS to be updated, a security counter, or arbitrary version information. In one example, the electronic device 101 may support the RP function by preventing an image (e.g., an OS binary) of a lower version than the stored RP version from being executed.

The electronic device 101 may perform the update using a virtual partition. The electronic device 101 may set a virtual partition that includes a portion of an older version OS and update data of a newer version OS. By using the newer version OS within the virtual partition, the electronic device 101 may attempt to boot based on the newer version OS. For example, during booting procedures, the electronic device 101 may record the RP version corresponding to the newer version OS in the memory 130 according to a predetermined process (e.g., a boot loader process). However, problems may occur during the update process. For example, the booting based on the updated OS may not be completed. Incomplete booting may cause a problem such as infinite boot errors. However, due to the RP function, OS rollback may not be performed. Even when the older version of the OS is stored in a memory area other than the virtual partition, the RP function may prevent the execution of the older version of the OS. According to an embodiment of the disclosure, the electronic device 101 may perform the update without conflicting with the RP function. Hereinafter, a method for updating the electronic device 101 may be described with reference to FIGS. 2 to 9.

FIG. 2 illustrates a memory structure of the electronic device according to an embodiment.

Referring to FIGS. 1 and 2, the electronic device 101 may separate an execution environment of the electronic device 101 by operating the general area 140 and the secure area 150. In one example, the general area 140 may mean an execution environment and a memory area operated by a rich OS 230 (e.g., an operating system 942 in FIG. 9). The secure area 150 may mean an execution environment and a memory area operated by a trusted OS 280. The general area 140 and the secure area 150 may be areas implemented by, for example, one processor 120. In one example, the secure area 150 may be an area implemented by a chip that includes a separate memory and a processor.

The general area 140 may include, for example, a normal application 210 and a secure OS support application 220. The normal application 210 (e.g., an application 946 in FIG. 9) may be an application that operates under the support of the rich OS 230, and may be referred to as a client application. The secure OS support application 220 (e.g., an application 946 in FIG. 9) may be referred to as an application capable of obtaining data of the secure area 150 under the support of the rich OS 230.

The secure area 150 may be an execution environment separated from the general area 140. For example, the trusted OS 280 may be operated independently from the rich OS 230. In one example, even when the rich OS 230 fails to boot, the trusted OS 280 may successfully boot. The secure area 150 may correspond to the execution environment of trusted applications 260 and 270. The trusted applications 260 and 270 are applications that satisfy a specified security requirement, and may be applications that operate under the support of the trusted OS 280.

In one example, a trusted application 260 may interact with the secure OS support application 220 operating in the general area 140. The secure OS support application 220 may request the trusted application 260 to perform a specified operation (e.g., a security-related operation) and receive a result value of the specified operation from the trusted application 260. The secure OS support application 220 may use the received result value to perform, for example, security-related operations (e.g., authentication). In one example, the trusted application 260 may obtain a value stored in the memory area used by the secure OS support application 220. For example, the trusted application 260 may obtain the stored value by monitoring the memory area used by the secure OS support application 220.

A monitor 290 may be a primary interface between the general area 140 and the secure area 150. For example, data from the general area 140 may be transmitted to the trusted application 270 in the secure area 150 through the monitor 290. The data transmitted to the secure area 150 may be stored in the secure area 150 after authentication by the trusted application 270. For example, the secure OS support application 220 in the general area 140 may obtain data in the secure area 150 through the monitor 290.

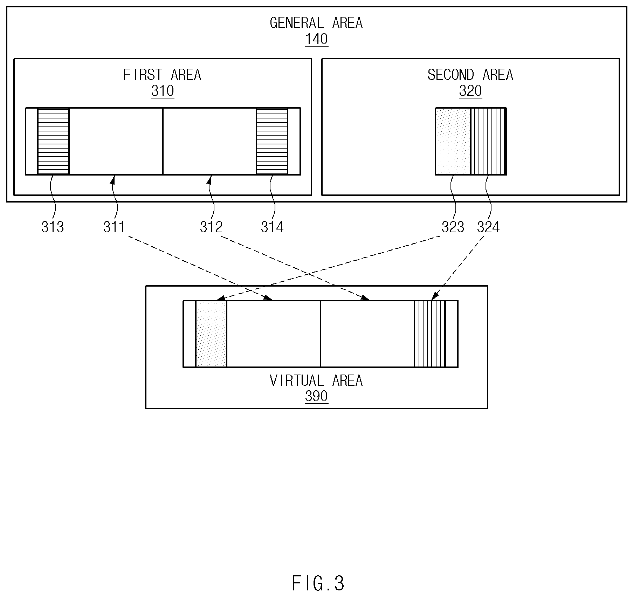

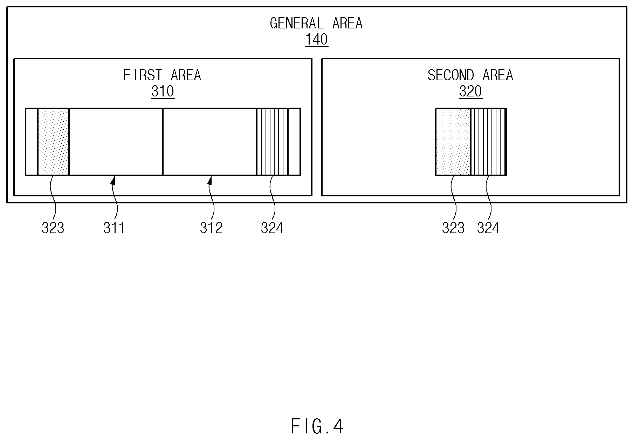

According to an embodiment, the electronic device 101 may store the RP version within the secure area 150 as described below with reference to FIGS. 3 to 8. By storing the RP version within the secure area 150, arbitrary rollback by the user or an intruder may be prevented. The OS update to be discussed below may be referred to as an OS update corresponding to, for example, the rich OS 230 in FIG. 2. With reference to FIGS. 3 and 4, a method for updating the electronic device 101 may be described.

FIG. 3 illustrates a configuration of a virtual partition according to an embodiment.

Referring to FIGS. 1 and 3, the general area 140 may include a first area 310 and a second area 320. For example, the first area 310 may correspond to a first partition of the general area 140, and the second area 320 may correspond to a second partition of the general area 140. The first and second partitions may be referred to as partitions, which are not virtual partitions.

In one example, the first area 310 may be a memory area where the OS is installed. A first portion 311 of the first area 310 may be, for example, a portion where codes implemented by a vendor of the OS are stored. A second portion 312 may be a portion where codes implemented by a vendor of the electronic device 101 are stored. The first portion 311 may include first data 313, and the second portion 312 may include second data 314. In the example in FIG. 3, the OS installed in the first area 310 may be referred to as a first version of the OS.

In one example, the electronic device 101 may store first update data 323 and second update data 324 in the second area 320. The second area 320 may be, for example, an area where user data is stored. The first update data 323 may be referred to as update data for the first data 313, and the second update data 324 may be referred to as update data for the second data 324. The first update data 323 and the second update data 324 may be referred to as data for updating the first version of the OS stored in the first area 310 to a second version of the OS.

In the example in FIG. 3, the first data 313 and the second data 314 are to be updated as an example, but the embodiments of the disclosure are not limited thereto. For example, one of the first data 313 and the second data 314 may be updated.

According to an embodiment, the electronic device 101 may configure a virtual area 390. For example, the virtual area 390 may be referred to as a virtual partition. The electronic device 101 may configure the virtual area 390 even when the first portion 311 includes the first update data 323 instead of the first data 313 and the second portion 312 includes the second update data 324 instead of the second data 314. Since the virtual area 390 is configured while actual data is being preserved as it is, the first data 313 and the second data 314 may remain stored in the first area 310.

Since the virtual area 390 is configured to include updated data, the virtual area 390 may include the second version of the OS. The electronic device 101 may attempt to boot using an OS (e.g., an OS image) of the virtual area 390.

FIG. 4 illustrates an updated operating system according to an embodiment.

Referring to FIGS. 1, 3, and 4, according to one embodiment, when booting using the OS of the virtual area 390 in FIG. 3 is successfully completed, the electronic device 101 may record the first update data 323 and the second update data 324 in the first area 310. For example, the electronic device 101 may determine that the update has been successfully completed when booting using the OS of the virtual area 390 is successfully completed. The electronic device 101 may complete the update by recording the update data in the first area 310 rather than the virtual area 390. For example, the electronic device 101 may record the first update data 323 at a location of the first data 313 and record the second update data 324 at a location of the second data 314. When the update is completed, for example, the electronic device 101 may delete the first update data 323 and the second update data 324 stored in the second area 320.

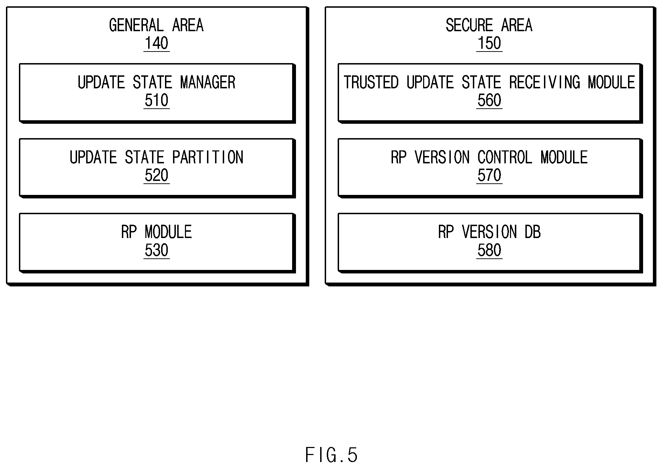

In one example, the update may not be completed successfully. For example, the electronic device 101 may fail to be booted based on the OS of the virtual area 390. According to an embodiment, when the update fails, the electronic device 101 may attempt to be booted using the first version of the OS stored in the first area 310 in FIG. 3. In this case, in order to prevent booting of the first version of the OS from being restricted due to the RP function, the electronic device 101 may perform the update according to the method to be described below with reference to FIGS. 5 to 8.

FIG. 5 illustrates modules of the electronic device according to an embodiment.

Referring to FIGS. 1 and 5, according to an embodiment, the electronic device 101 may set the RP version based on an update state. The components of the electronic device 101 described with reference to FIG. 5 may be referred to as software modules implemented by the processor 120 executing instructions. Operations of the various components to be described below may all be referred to as operations of the electronic device 101.

According to one embodiment, the general area 140 may include an update state manager 510, an update state partition 520, and an RP module 530. The update state partition 520 may be referred to as a memory area in which an update state of the electronic device 101 is recorded. The RP module 530 may be, for example, a module that prevents a binary (e.g., an OS image) of a lower RP version than the RP version recorded in an RP version DB 580 from being executed. The RP module 530 may be referred to as a module that performs the RP function described above. In the example in FIG. 5, the RP module 530 is implemented on the general area 140, but the embodiments of the disclosure are not limited thereto. For example, the RP module 530 may be implemented on the secure area 150.

According to one embodiment, upon booting, the update state manager 510 may transmit information indicating a boot result to a trusted update state receiving module 560. For example, the update state manager 510 may transmit information to the trusted update state receiving module 560 through any interface between the general area 140 and the secure area 150 (e.g., the monitor 290 in FIG. 2). The update state manager 510 may be codes being executed upon the booting of the electronic device 101. For example, the update state manager 510 may be implemented as a part of a boot loader. For example, the update state manager 510 may be a daemon that is executed independently of the booting of the OS.

The update state manager 510 may identify the update state stored in the update state partition 520 and obtain result information indicating a boot result based on the identified update state. The update state may include, for example, a first state, a second state, and/or an error state. The first state may mean a state in which the electronic device 101 is booted using the OS prior to the update (e.g., the first version of the OS stored in the first area 310 in FIG. 3) (e.g., a state in which the electronic device operates using a previous version of the OS). The second state may mean a state in which the electronic device 101 is booted using the updated OS (e.g., the second version of the OS stored in the virtual area 390 in FIG. 3 or the first area 310 in FIG. 4) (e.g., a state in which the electronic device operates using the updated version of the OS). The error state may mean a state that requires a rollback due to an error or update failure.

In one example, the result information may include additional information in addition to the update state information (e.g., a first state, second state, or error state). For example, the result information may include time information (e.g., a timestamp) indicating the time at which the update state information is obtained. For example, the result information may include any necessary information in addition to the information described above.

According to an embodiment, the secure area 150 may include the trusted update state receiving module 560, an RP version control module 570, and the RP version DB 580. The RP version DB 580 may be a memory area where the RP version is stored.

The trusted update state receiving module 560 may receive the result information (e.g., the update state information, the time information, and/or arbitrary information) from the update state manager 510. The trusted update state receiving module 560 may transmit the received result information to the RP version control module 570.

In one example, the trusted update state receiving module 560 may perform authentication on the received result information. For example, the trusted update state receiving module 560 may authenticate the result information using an encryption method for the result information, the access code, and/or the time information. The trusted update state receiving module 560 may transmit at least some of the result information to the RP version control module 570 when the authentication of the result information is successful.

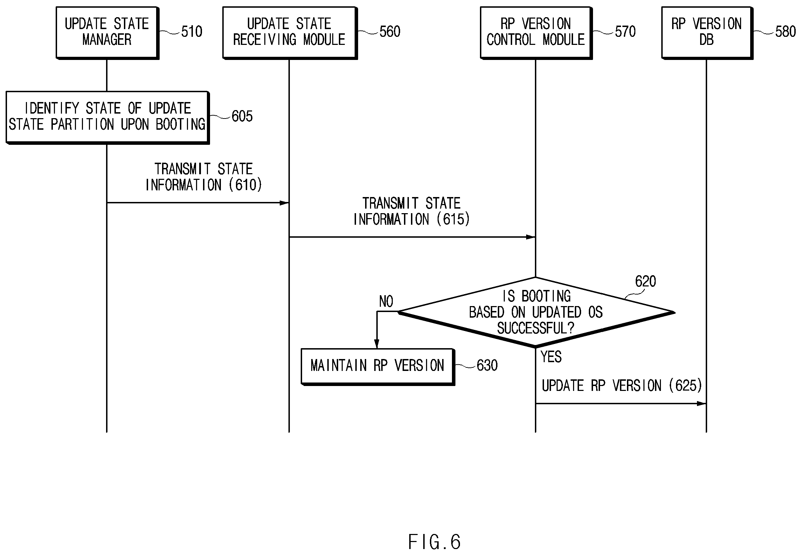

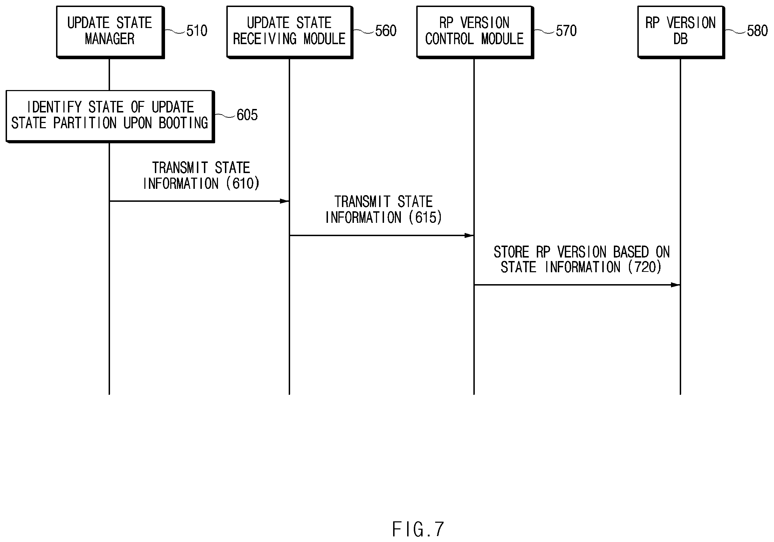

According to one embodiment, the RP version control module 570 may manage RP version information stored in the RP version DB 580 based on the result information (e.g., the state information) received from the trusted update state receiving module 560. For example, the RP version control module 570 may update the RP version information when the result information indicates a successful boot based on the updated OS. For example, the RP version control module 570 may store RP control information for each partition based on the state information indicated by the result information. The operation of the RP version control module 570 may be described with reference to FIGS. 6 and 7.

Through the update of the RP version based on the result information, the electronic device 101 may prevent an update error caused by the RP function that may occur during the update. The electronic device 101 may complement security vulnerabilities by determining whether to update the RP version on the secure area 150 and by recording the RP version.

FIG. 6 is a signal flow diagram of a method for updating an electronic device according to an embodiment.

Referring to FIGS. 5 and 6, according to an embodiment, the RP version control module 570 may store RP version information in the RP version DB 580 based on result information. For example, the RP version DB 580 may store the RP version information corresponding to an older version of the OS (e.g., the OS stored in the first area 310 in FIG. 3).

In operation 605, upon booting of the electronic device 101, the update state manager 510 may identify a state of the update state partition 520. In operation 610, the update state manager 510 may transmit state information (e.g., the result information) to the update state receiving module 560.

In operation 615, the update state receiving module 560 may transmit the state information to the RP version control module 570. For example, the update state receiving module 560 may perform authentication on the received state information and transmit the state information when the authentication is successful.

In operation 620, the RP version control module 570 may determine whether booting based on the updated OS is successful. For example, the RP version control module 570 may determine whether booting based on the updated OS is successful based on the received state information. For example, the RP version control module 570 may determine that booting based on the updated OS is successful when the received state information indicates a second state (e.g., a state booted using an updated second version of the OS). For example, the RP version control module 570 may determine that booting based on the updated OS fails when the received state information indicates a first state (e.g., a booted state using a first version of the OS, which is an older version) or an error state.

When booting based on the updated OS is successful (e.g., YES in operation 620), in operation 625, the RP version control module 570 may update the RP version stored in the RP version DB 580. For example, the RP version control module 570 may update the RP version information stored in the RP version DB 580 from first RP version information to second RP version information. For example, the first RP version information may be an RP version corresponding to the first version of the OS, and the second RP information may be an RP version corresponding to the second version of the OS.

When booting based on the updated OS fails (e.g., NO in operation 620), in operation 630, the RP version control module 570 may maintain the RP version stored in the RP version DB 580. For example, the RP version control module 570 may maintain the RP version information stored in the RP version DB 580 as the first RP version information when the received result (e.g., the state information) indicates the first state (e.g., the booted state using the first version of the OS, which is the older version) or the error state.

The RP module 530 may determine whether to prevent rollback using the RP version stored in the RP version DB 580. For example, when the update fails (e.g., NO in operation 620), the result information may indicate the first state or the error state. In this case, the RP version control module 570 may maintain the first RP version information (e.g., operation 630). The RP module 530 may apply a rollback prevention function based on the first RP version information. Therefore, even when the update to the second version fails, a rollback to the first version of the OS may be performed. For example, when booting based on the second version of the OS stored in a virtual partition (e.g., the virtual area 390 in FIG. 3) is successful (e.g., YES in operation 620), the result information may indicate the second state. In this case, the RP version control module 570 may update the first RP version information to the second RP version information (e.g., operation 625). The RP module 530 may apply the rollback prevention function based on the second RP version information.

FIG. 7 is a signal flow diagram of a method for updating an electronic device according to an embodiment .

Referring to FIGS. 5 and 7, according to an embodiment, the RP version control module 570 may store RP version information for each partition in the RP version DB 580. For example, the RP version DB 580 may store the RP version information corresponding to an older version of the OS (e.g., the OS stored in the first area 310 in FIG. 3). The RP version information corresponding to a first version of the OS, which is an older version, may be mapped to a first partition (e.g., the first area 310 in FIG. 3) and stored in the RP version DB 580.

In operation 605, upon booting of the electronic device 101, the update state manager 510 may identify a state of the update state partition 520. In operation 610, the update state manager 510 may transmit state information (e.g., the result information) to the update state receiving module 560. In operation 615, the update state receiving module 560 may transmit state information to the RP version control module 570.

In operation 720, the RP version control module 570 may store the RP version information in the RP version DB 580 based on the received state information. For example, the received state information may indicate a second state (e.g., a booted state using an updated second version of the OS). The RP version control module 570 may map the RP version information corresponding to the second version of the OS to a virtual partition (e.g., the virtual area 390 in FIG. 3) and store the RP version information in the RP version DB 580. In this case, the RP version DB 580 may store first RP version information (e.g., RP version information corresponding to the first version of the OS) mapped to the first partition and second RP version information (e.g., RP version information corresponding to the second version of the OS) mapped to the virtual partition. Meanwhile, when the result information indicates an error state, the RP version control module 570 may not store the received result information in the RP version DB 580.

The RP module 530 may determine whether to prevent rollback using the RP version of the partition used for booting. For example, when the first version of the OS stored in the first partition (e.g., the first area 310 in FIG. 3) is used for booting, the RP module 530 may apply the rollback prevention function based on the first RP version information mapped to the first partition. Therefore, even when the update to the second version fails, a rollback to the first version of the OS may be performed. For example, when the second version of the OS stored in the virtual partition (e.g., the virtual area 390 in FIG. 3) is used for booting, the RP module 530 may apply the rollback prevention function based on the second RP version information mapped to the virtual partition.

When booting based on the updated second version of the OS is successfully completed, the electronic device 101 may record update data to the first partition (e.g., the first area 310 in FIG. 3). For example, as in the first area 310 in FIG. 4, the OS in the first partition may be updated to the second version. In this case, the update state manager 510 may transmit the result information indicating a result of booting based on the first partition to the RP version control module 570 through the trusted update state receiving module 560. The RP version control module 570 may update the RP version information mapped to the first partition from the first RP version information to the second RP version information. Then, in booting based on the first partition, the RP module 530 may apply the RP function based on the second RP information currently mapped to the first partition.

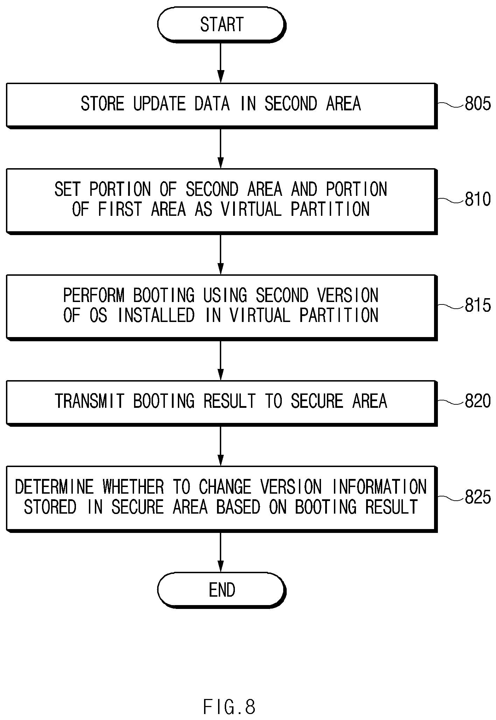

FIG. 8 is a flowchart of a method for updating an electronic device according to an embodiment.

Referring to FIGS. 1 and 8, according to an embodiment, the electronic device 101 may include the memory 130 and the processor 120. The memory 130 may store instructions that, when executed, cause the processor 120 to perform operations to be described below.

In operation 805, the electronic device 101 may store update data (e.g., first update data (e.g., the first update data 323 and/or the second update data 324 in FIG. 3)) in a second area (e.g., the second area 320 in FIG. 3). For example, the electronic device 101 may receive the update data from an external electronic device using the communication circuitry 190 and store the received update data in the memory 130.

In operation 810, the electronic device 101 may set a portion of the second area and a portion of a first area (e.g., the first area 310 in FIG. 3) as a virtual partition (e.g., the virtual area 390 in FIG. 3). By bundling the portion of the first version of the OS installed in the first area and the update data stored in the second area into a single virtual partition, the virtual partition may be in a state where an updated second version of the OS is installed. For example, the first area and the second area may be a memory area within a rich execution environment (REE).

In operation 815, the electronic device 101 may perform booting using the second version of the OS installed in the virtual partition. As the booting is being performed, the electronic device 101 may identify the update state as described above with reference to operation 605 in FIG. 6.

In operation 820, the electronic device 101 may transmit a booting result to a secure area (e.g., the secure area 150 in FIG. 2). For example, the secure area may be a memory area that is operated based on a secure OS (e.g., the trusted OS 280 in FIG. 2) that is different from the OS (e.g., the rich OS 230 in FIG. 2). As described above with respect to operations 610 and 615 of FIG. 6, the electronic device 101 may transmit a booting result (e.g., state information) to the RP version control module 570 through the update state receiving module 560.

In operation 825, the electronic device 101 may determine whether to change version information (e.g., an RP version) stored in the secure area based on the booting result. For example, as described above with respect to operation 620 in FIG. 6, the electronic device 101 may change the version information depending on whether booting based on the updated OS is successful. For example, the electronic device 101 may change or maintain the version information stored in the secure area based on the result using a program on the secure OS (e.g., the RP version control module 570 in FIG. 5). For example, the secure area may be a memory area within a trusted execution environment (TEE). For example, the version information may be information for determining a rollback of the OS. The electronic device 101 may be configured to prevent the OS from being rolled back to a version older than the version information stored in the secure area.

For example, when the booting result indicates success, the electronic device 101 may change the version information from the first version to the second version (e.g., operation 625 in FIG. 6). After the version information is changed, the electronic device 101 may update the OS of the first area to the second version of the OS by recording the update data in the part of the OS data in the first area corresponding to the update data.

When the result indicates failure (e.g., NO in operation 620 in FIG. 6), the electronic device 101 may maintain the version information as the first version (e.g., operation 630 in FIG. 6) and attempt to boot using the first version of the OS stored in the first area. For example, when the result indicates booting using the first version of the OS (e.g., the first state) or an error state, the electronic device 101 may determine that the booting based on the updated OS has failed.

FIG. 9 is a block diagram illustrating an electronic device 901 in a network environment 900 according to various embodiments. Referring to FIG. 9, the electronic device 901 in the network environment 900 may communicate with an electronic device 902 via a first network 998 (e.g., a short-range wireless communication network), or at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module(SIM) 996, or an antenna module 997. In some embodiments, at least one of the components (e.g., the connecting terminal 978) may be omitted from the electronic device 901, or one or more other components may be added in the electronic device 901. In some embodiments, some of the components (e.g., the sensor module 976, the camera module 980, or the antenna module 997) may be implemented as a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to an embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 921. For example, when the electronic device 901 includes the main processor 921 and the auxiliary processor 923, the auxiliary processor 923 may be adapted to consume less power than the main processor 921, or to be specific to a specified function. The auxiliary processor 923 may be implemented as separate from, or as part of the main processor 921.

The auxiliary processor 923 may control at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 923. According to an embodiment, the auxiliary processor 923 (e.g., the neural processing unit) may include a hardware structure specified for artificial intelligence model processing. An artificial intelligence model may be generated by machine learning. Such learning may be performed, e.g., by the electronic device 901 where the artificial intelligence is performed or via a separate server (e.g., the server 908). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thererto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display module 960 may include, for example, a display, a hologram device, or a projector and control circuitry to control a corresponding one of the display, hologram device, and projector. According to an embodiment, the display module 960 may include a touch sensor adapted to detect a touch, or a pressure sensor adapted to measure the intensity of force incurred by the touch.

The audio module 970 may convert a sound into an electrical signal and vice versa. According to an embodiment, the audio module 970 may obtain the sound via the input module 950, or output the sound via the sound output module 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, a HDMI connector, a USB connector, a SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to an embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The wireless communication module 992 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., the mmWave band) to achieve, e.g., a high data transmission rate. The wireless communication module 992 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 964dB or less) for implementing mMTC, or U-plane latency (e.g., 0.5ms or less for each of downlink (DL) and uplink (UL), or a round trip of 9ms or less) for implementing URLLC.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in the communication network, such as the first network 998 or the second network 999, may be selected, for example, by the communication module 990 (e.g., the wireless communication module 992) from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

According to various embodiments, the antenna module 997 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the electronic devices 902 or 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

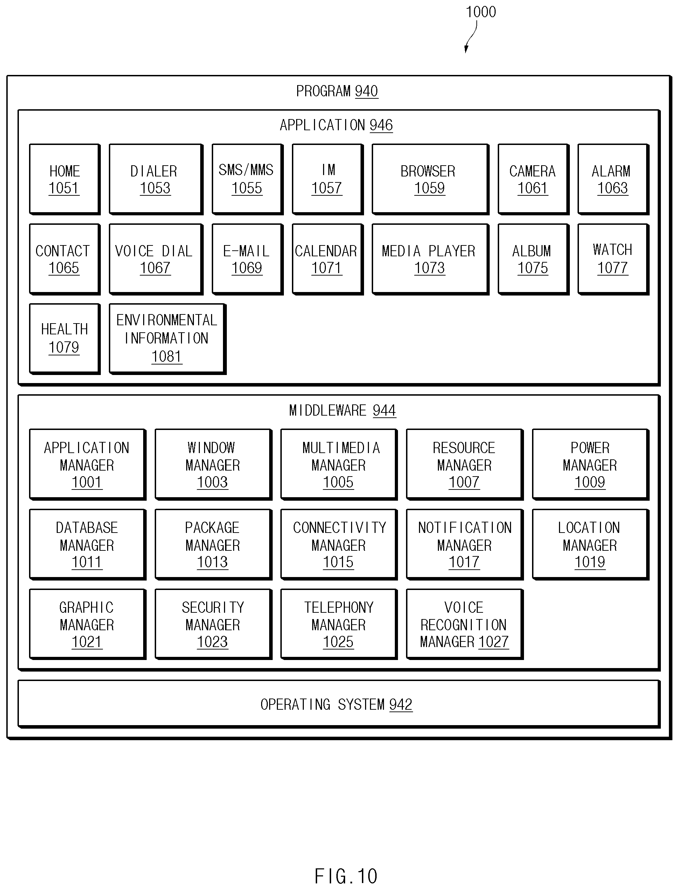

FIG. 10 is a block diagram 1000 illustrating the program 940 according to various embodiments. According to an embodiment, the program 940 may include an operating system (OS) 942 to control one or more resources of the electronic device 901, middleware 944, or an application 946 executable in the OS 942. The OS 942 may include, for example, AndroidTM, iOSTM, WindowsTM, SymbianTM, TizenTM, or BadaTM. At least part of the program 940, for example, may be pre-loaded on the electronic device 901 during manufacture, or may be downloaded from or updated by an external electronic device (e.g., the electronic device 902 or 904, or the server 908) during use by a user.

The OS 942 may control management (e.g., allocating or deallocation) of one or more system resources (e.g., process, memory, or power source) of the electronic device 901. The OS 942, additionally or alternatively, may include one or more driver programs to drive other hardware devices of the electronic device 901, for example, the input module 950, the sound output module 955, the display module 960, the audio module 970, the sensor module 976, the interface 977, the haptic module 979, the camera module 980, the power management module 988, the battery 989, the communication module 990, the subscriber identification module 996, or the antenna module 997.

The middleware 944 may provide various functions to the application 946 such that a function or information provided from one or more resources of the electronic device 901 may be used by the application 946. The middleware 944 may include, for example, an application manager 1001, a window manager 1003, a multimedia manager 1005, a resource manager 1007, a power manager 1009, a database manager 1011, a package manager 1013, a connectivity manager 1015, a notification manager 1017, a location manager 1019, a graphic manager 1021, a security manager 1023, a telephony manager 1025, or a voice recognition manager 1027.

The application manager 1001, for example, may manage the life cycle of the application 946. The window manager 1003, for example, may manage one or more graphical user interface (GUI) resources that are used on a screen. The multimedia manager 1005, for example, may identify one or more formats to be used to play media files, and may encode or decode a corresponding one of the media files using a codec appropriate for a corresponding format selected from the one or more formats. The resource manager 1007, for example, may manage the source code of the application 946 or a memory space of the memory 930.The power manager 1009, for example, may manage the capacity, temperature, or power of the battery 989, and determine or provide related information to be used for the operation of the electronic device 901 based at least in part on corresponding information of the capacity, temperature, or power of the battery 989. According to an embodiment, the power manager 1009 may interwork with a basic input/output system (BIOS) (not shown) of the electronic device 901.

The database manager 1011, for example, may generate, search, or change a database to be used by the application 946. The package manager 1013, for example, may manage installation or update of an application that is distributed in the form of a package file. The connectivity manager 1015, for example, may manage a wireless connection or a direct connection between the electronic device 901 and the external electronic device. The notification manager 1017, for example, may provide a function to notify a user of an occurrence of a specified event (e.g., an incoming call, message, or alert). The location manager 1019, for example, may manage locational information on the electronic device 901. The graphic manager 1021, for example, may manage one or more graphic effects to be offered to a user or a user interface related to the one or more graphic effects.

The security manager 1023, for example, may provide system security or user authentication. The telephony manager 1025, for example, may manage a voice call function or a video call function provided by the electronic device 901. The voice recognition manager 1027, for example, may transmit a user's voice data to the server 908, and receive, from the server 908, a command corresponding to a function to be executed on the electronic device 901 based at least in part on the voice data, or text data converted based at least in part on the voice data. According to an embodiment, the middleware 1044 may dynamically delete some existing components or add new components. According to an embodiment, at least part of the middleware 944 may be included as part of the OS 942 or may be implemented as another software separate from the OS 942.

The application 946 may include, for example, a home 1051, dialer 1053, short message service (SMS)/multimedia messaging service (MMS) 1055, instant message (IM) 1057, browser 1059, camera 1061, alarm 1063, contact 1065, voice recognition 1067, email 1069, calendar 1071, media player 1073, album 1075, watch 1077, health 1079 (e.g., for measuring the degree of workout or biometric information, such as blood sugar), or environmental information 1081 (e.g., for measuring air pressure, humidity, or temperature information) application. According to an embodiment, the application 946 may further include an information exchanging application (not shown) that is capable of supporting information exchange between the electronic device 901 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 1069) of the electronic device 901 to the external electronic device. Additionally or alternatively, the notification relay application may receive notification information from the external electronic device and provide the notification information to a user of the electronic device 901.

The device management application may control the power (e.g., turn-on or turnoff) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 940) including one or more instructions that are stored in a storage medium (e.g., internal memory 936 or external memory 938) that is readable by a machine (e.g., the electronic device 901). For example, a processor (e.g., the processor 920) of the machine (e.g., the electronic device 901) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
memory including a first area in which a first version of an operating system (OS) is installed, a second area different from the first area, and a secure area in which version information about the OS is stored; and
a processor,
wherein the memory stores instructions that, when executed by the processor, cause the processor to:
store update data corresponding to a second version of the OS in the second area;
set a portion of the second area in which the update data is stored and a portion of the first area as a virtual partition;
attempt to boot using the second version of the OS installed in the virtual partition;
transmit a result of the booting to the secure area; and
determine whether to change the version information stored in the secure area based on the result.

2. The electronic device of claim 1, wherein the instructions, when executed by the processor, cause the processor to prevent the OS from being rolled back to a version older than the version information stored in the secure area.

3. The electronic device of claim 2, wherein the instructions, when executed by the processor, cause the processor to change the version information from the first version to the second version when the result indicates success.

4. The electronic device of claim 3, wherein the instructions, when executed by the processor, cause the processor to update the OS of the first area to the second version of the OS by recording the update data in a portion corresponding to the update data in OS data of the first area after the change in the version information.

5. The electronic device of claim 2, wherein the instructions, when executed by the processor, cause the processor to:
maintain the version information as the first version when the result indicates failure; and
attempt to boot using the first version of the OS stored in the first area.

6. The electronic device of claim 1, wherein the secure area is operated based on a secure OS different from the OS.

7. The electronic device of claim 6, wherein the instructions, when executed by the processor, cause the processor to change or maintain the version information stored in the secure area based on the result using a program on the secure OS.

8. The electronic device of claim 1, wherein the first area and the second area are memory areas within a rich execution environment (REE), and the secure area is a memory area within a trusted execution environment (TEE).

9. A method for updating an electronic device including a memory and a processor, comprising:
setting a portion of a data area of a first version of an OS installed in a first area of the memory and a data area of update data of a second version stored in a second area of the memory as a virtual partition;
attempting to boot using the second version of the OS installed in the virtual partition;
transmitting a result of the booting to a secure area of the memory; and
determining whether to change version information about the OS stored in the secure area based on the result.

10. The method of claim 9, wherein the processor is configured to prevent the OS from being rolled back to a version older than the version information stored in the secure area.

11. The method of claim 12, wherein the determining of whether to change version information includes changing the version information from the first version to the second version when the result indicates success.

12. The method of claim 11, further comprising updating the OS of the first area to the second version of the OS by recording the update data in a portion corresponding to the update data in OS data of the first area after the change in the version information.

13. The method of claim 10, wherein the determining of whether to change version information includes:
maintaining the version information as the first version when the result indicates failure; and
attempting to boot using the first version of the OS stored in the first area.

14. The method of claim 9, wherein the secure area is operated based on a secure OS different from the OS.

15. The method of claim 14, wherein the determining of whether to change version information includes changing or maintaining the version information stored in the secure area based on the result using a program on the secure OS.
